# EUROPÄISCHE PATENTSCHRIFT

(11) **EP 1 142 916 B1**
(45) Veröffentlichungstag und Bekanntmachung des Hinweises auf die Patenterteilung: **11.08.2004**
(21) Anmeldenummer: 01108292.2
(22) Anmeldetag: 02.04.2001
(51) Int. Cl.: C08F 10/00, C08F 2/34

(54) **Gasphasenpolymerisationsverfahren mit Direktkühlsystem**
Gas phase polymerization process with direct-cooling system
Procédé de polymérisation en phase gazeuse avec système de refroidissement direct

(30) Priorität: 04.04.2000 DE 10016625
(43) Veröffentlichungstag der Anmeldung: 10.10.2001
(73) Patentinhaber: Basell Polyolefine GmbH, 50389 Wesseling (DE)
(72) Erfinder: Evertz, Kaspar, Dr., 67105 Schifferstadt (DE); Sandkühler, Manfred, 67269 Grünstadt (DE); Schicketanz, Walter, Dr., 67227 Frankenthal (DE)
(74) Vertreter: Meyer, Thomas

(56) Entgegenhaltungen:
- DE-A- 2 021 810
- GB-A- 1 525 978

## Beschreibung

Gegenstand der vorliegenden Erfindung ist eine Gasphasenpolymerisationsanlage und ein Gasphasenpolymerisationsverfahren zur Herstellung von Polyolefinen, vorzugsweise Polyethylen, bei welchem man die fluide monomere Komponente, vorzugsweise Ethylen, sowie gegebenenfalls eines oder mehrere Comonomere in der Polymerisationszone wenigstens eines Wirbelschichtreaktors in Anwesenheit eines oder mehrerer Katalysatoren unter Reaktionsbedingungen polymerisiert, wobei das Wirbelgas zur Abführung der Polymerisations- bzw. Reaktionswärme im Kreislauf geführt wird und das Polymerisationsprodukt aus dem Kreislauf abgezogen sowie die entsprechende Menge an Monomeren sowie gegebenenfalls Comonomeren ergänzend zugeführt wird.

Gasphasenpolymerisationsverfahren stellen wirtschaftliche Verfahren zur Polymerisation von Olefinen, wie Ethylen und Propylen bzw. zur Copolymerisation von Olefinen mit C₃-C₈-Olefinen dar. Derartige Gasphasenpolymerisationsverfahren können u.a. entweder als Gasphasenwirbelschichtverfahren oder als gerührte Gasphasenverfahren ausgeführt werden. Solche Verfahren werden beispielsweise in EP-A-0 475 603, EP-A-0 089 691 und EP-A-0 571 826 beschrieben.

Charakteristisch für das Gasphasenwirbelschichtverfahren ist, daß das aus polymerisierenden Polymerteilchen bestehende Bett von unten durch eine Gasmischung in der Schwebe gehalten wird. Die freiwerdende Polymerisations- bzw. Reaktionswärme wird über die vorgenannte Gasmischung aus dem Reaktor abgeführt. Das Wirbelgas wird in einer außerhalb des Reaktors liegenden Wärmeaustauschzone mittels indirekter Kühlung abgekühlt und i.a. durch eine Gasverteilerplatte wieder in den Reaktor zurückgeführt (Kreisgas bzw. Wirbelgas).

Gasphasenwirbelschichtverfahren zur Herstellung von Polyolefinen werden üblicherweise in einem vertikalen zylindrischen Reaktor bei erhöhtem Druck, sowie erhöhter Temperatur durchgeführt. Beispielsweise erfolgt die Gasphasenwirbelschichtpolymerisation von Ethylen bei einem Reaktorinnendruck von ca. 25 bar und bei einer Temperatur von ca. 110°C.

Das mit dem Wirbelgas zugeführte Monomer wird mit Hilfe eines Katalysators und gegebenenfalls Cokatalysatoren sowie diversen Hilfsstoffen im Wirbelschichtreaktor zu den entsprechenden Polyolefinen umgesetzt, wobei ein zumeist pulvriges Polymerisationsprodukt erhalten wird. Die Polymerteilchen in Pulverform, die im wesentlichen das fluidisierte Bett bilden, werden i.a. mittels kontinuierlicher oder diskontinuierlicher Freigabe einer Öffnung aus dem Wirbelschichtreaktor ausgeschleust. Die (weitgehende) Trennung von Gas und Pulver erfolgt in einem oder mehreren Abscheidesystemen bei niedrigerem Druck. Außerdem weist der Wirbelschichtreaktor i.a. am oberen Ende eine Disengagementzone und zusätzlich bzw. wahlweise mehrere nachgeschaltete Stufen auf, um den Mitriß von Partikeln zu vermeiden bzw. zu reduzieren.

Bei der im Gasphasenwirbelschichtverfahren durchgeführten Polymerisation von Olefinen wird eine erhebliche Polymerisations- bzw. Reaktionswärme frei, die im wesentlichen von dem Wirbelgas aufgenommen wird. Demzufolge besitzt das den Wirbelschichtreaktor am oberen Ende austretende Wirbelgas eine dementsprechend höhere Temperatur als beim Eintritt in den Wirbelschichtreaktor. Daher muß das im Kreislauf geführte Wirbelgas zur Abführung der Reaktions- bzw. Polymerisationswärme in einer Wärmeaustauschzone vor der Rückführung in den Reaktor abgekühlt werden.

Im Stand der Technik sind mehrere Vorrichtungen und Verfahren zur Kühlung des im Kreis geführten Wirbelgases beschrieben. Den vorgenannten Verfahren und Vorrichtungen ist gemeinsam, daß die Kühlung mittels indirekten Wärmeaustausch, beispielsweise an herkömmlichen Wärmetauschern, wie beispielsweise Rohrbündelwärmetauschen, erfolgt. Die entsprechenden Kühlvorrichtungen für den indirekten Wärmeaustausch werden nachstehend als Rückgaskühler bezeichnet.

Ein Teil der entstehenden Reaktions- bzw. Polymerisationswärme wird im allgemeinen über die Wand des meist nicht isolierten Reaktors abgeführt. In der JP 070/620/09-A und in der JP 09/497/03-A werden Vorrichtungen zur indirekten Kühlung der Reaktorwand, beispielsweise eine mit Kühlwasser durchströmte Berohrung beschrieben.

Lange Zeit wurde das Rückgas mittels indirekter Kühlung auf eine Rückführungsgastemperatur, die leicht über dem Taupunkt des Rückgases liegt, abgekühlt. Der Taupunkt stellt diejenige Temperatur dar, bei der das (Rück)-gas zu kondensieren beginnt. Einer der Gründe, weshalb das Rückgas immer nur auf eine Temperatur knapp über dem Taupunkt gekühlt wurde, beruhte auf der Annahme, daß das Einführen von Flüssigkeit in einen Gasphasenwirbelschichtreaktor unvermeidlich zur Bildung von Verklumpungen und/oder zum Verstopfen bzw. Zusetzen der Verteilerplatte führen würde.

In jüngerer Zeit konnte eine deutliche Erhöhung der Leistungsfähigkeit (Raum-Zeit-Ausbeute) für das Gasphasenpolymerisationsverfahren erreicht werden, in dem das erwärmte Rückgas gezielt unter den Taupunkt abgekühlt wurde. Beim Eintrag des resultierenden Zweiphasengemisches, bestehend aus kondensierten und gas förmigem Fluid, verdampft das Kondensat unter Aufnahme eines Teiles der Reaktionswärme (sog. "Condensed Mode"). In den Patenten EP 0 089 691-B1, US 4,543,399, US 4,588,750 und US 5,352,749 wird eine indirekte Kühlung beansprucht, die dadurch gekennzeichnet ist, daß zumindest ein Teil des Rückgases unter Bildung eines Zweiphasengemisches unterhalb den Taupunkt abgekühlt und in den Reaktor rückgeführt wird. Darüber hinaus wird beansprucht, durch Erhöhung oder gezielte Zugabe von höher siedenden und damit bei höheren Temperaturen kondensierenden Komponenten den Kondensatanteil zu erhöhen. In dem US-Patent 4,588,750 wird darüber hinaus beschrieben, daß Monomere in flüssiger Form dem Reaktor unterhalb des Fließbettes zugeführt werden. Die Zufuhr der vorgenannten unter Reaktionsbedingungen verdampfenden Komponenten bewirkt eine zusätzliche Verdampfungskühlung im Reaktor.

Im US-Patent 5,352,749 wird ebenfalls eine indirekte Kühlung offenbart, bei der jedoch die flüssige Kondensatphase vor der Rückführung in den Reaktor von dem Zweiphasengemisch des Rückgases separiert wird. Analoges Vorgehen findet sich im "Innovene"- Polyethylenverfahren der BP (WO 9428032).

Allen vorgenannten Verfahren ist gemeinsam, daß die bei der Gasphasenpolymerisation entstehende Reaktionswärme über eine indirekte Kühlvorrichtung abgeführt wird. Der Verfahrensschritt der indirekten Kühlung bzw. der Teilkondensation des Wirbelgases, welches zugleich das Kreisgas ist, erfolgt i.a. in einem oder mehreren Wärmetauschern. Typischerweise werden Rohrbündelwärmetauscher oder auch Plattenwärmetauscher eingesetzt. Ein prinzipieller Nachteil der indirekten Kühlung liegt darin, daß der gasseitige Wärmeübergang relativ schlecht ist. Es sind daher erhebliche spezifische Wärmeübertragungsflächen erforderlich, wodurch hohe apparative Kosten verursacht werden. Hinzu kommt, daß sich der konstruktionsbedingt schlechte Wärmeübergang auch hinsichtlich des erforderlichen Energieaufwandes ungünstig auswirkt. Indirekte Kühlvorrichtungen sind darüber hinaus prinzipiell nur sehr schlecht bzw. mit großer Verzögerung steuerbar und lassen i.a. keine Feinregulierung der Wärmeabfuhr zu. Zwar kann die spezifische Wärmeübertragungsfläche bei Abkühlung auf Temperaturen unterhalb des Taupunkts aufgrund der resultierenden Zweiphasigkeit vermindert werden, jedoch sind auch dann sehr große Wärmeaustauschflächen erforderlich, da indirekte Kühlverfahren prinzipiell relativ ineffektiv sind.

Zudem wird durch das zirkulierende Kreisgas auch eine gewisse Menge an feinteiligem Polymerisat aus dem Reaktor mitgerissen und in das Kreisgassystem überführt. Diese Polymerisatpartikel enthalten aktiven Katalysator und können somit auch im Kreisgassystem weiter polymerisieren. Lagern sich diese Partikel im Kreisgassystem ab, so können an diesen Stellen Beläge und Anwachsungen entstehen (fouling). Diese Beläge können Störungen verursachen (z.B. Verstopfung des Kühlers) und können aber auch teilweise wieder abplatzen. Durch die abplatzenden Beläge können dann Bohrungen der Gasverteilerplatte des Reaktors rasch verstopfen und so eine Abstellung und eine aufwendige Reinigung des Reaktors erfordlich machen. Gelangen derartige Belagstücke durch die Gasverteilerplatte in den Reaktor, so wird die Produktqualität durch diese Partikel verschlechtert, es bilden sich sogenannte Stippen. Insbesondere bei Produkten für Folienanwendungen kann es so zum Anfall von nicht spezifikationsgerechtem Material kommen.

Es besteht daher ein starkes Bedürfnis, ein Gasphasenpolymerisationsverfahren zur Herstellung von Polyolefinen zur Verfügung zu stellen, welches die Leistungsfähigkeit der im Stand der Technik bekannten Verfahren aufweist und zugleich die vorgenannten Nachteile des Standes der Technik bezüglich des hohen apparativen und somit kostenintensiven Aufwandes für den Verfahrensschritt der indirekten Kühlung bzw. Teilkondensation des Kreisgases vermeidet. Der vorliegenden Erfindung lag außerdem die Aufgabe zugrunde, eine Möglichkeit zu finden, die Ausbildung von Polymerisatbelägen in der Kreisgasleitung von Gasphasenpolymeriationsreaktoren weitgehend zu verhindern, die Laufzeit solcher Anlagen zu verlängern und die Qualität der Polymerisationsprodukte zu erhöhen.

Weitere Aufgaben ergeben sich aus der nachfolgenden Beschreibung der Erfindung.

Die Lösung der verfahrensbezogenen Aufgaben liegt in den Merkmalen des Anspruches 1.

Vorteilhafte Ausgestaltungen des erfindungsgemäßen Verfahrens sind in den Verfahrensunteransprüchen definiert.

Erfindungsgemäß wird ein Gasphasenpolymerisationsverfahren zur Herstellung von Polyolefinen, vorzugsweise Polyethylen, bei welchem man die fluide monomere Komponente, vorzugsweise Ethylen, sowie gegebenenfalls eines oder mehrerer Comonomere in der Polymerisationszone wenigstens eines Wirbelschichtreaktors in Anwesenheit eines oder mehrerer Katalysatoren unter Reaktionsbedingungen polymerisiert, wobei das Wirbelgas zur Abführung der Polymerisations- bzw. Reaktionswärme im Kreislauf geführt wird und das Polymerisationsprodukt aus dem Reaktor abgezogen sowie die entsprechende Menge an Monomeren sowie gegebenenfalls Comonomeren ergänzend und gegebenenfalls weitere Hilfsstoffe, wie Molgewichtsregler, Antistatika etc. zugeführt werden, bereitgestellt, welches dadurch gekennzeichnet ist, daß aus dem Wirbelschichtreaktor abgeführtes Wirbelgas mittels einer direkten Kühlvorrichtung, bei der Kühlmittel in direkten Kontakt mit dem Wirbelgas gebracht wird, abgekühlt wird, wobei erwärmtes Kühlmittel wenigstens einer weiteren Kühlstufe zwecks Abkühlung zugeführt wird und nach Abkühlung vollständig oder teilweise in die direkte Kühlvorrichtung rückgeführt wird und/oder wobei erwärmtes oder abgekühltes Kühlmittel vollständig oder teilweise in den Reaktor rückgeführt wird.

Die erfindungsgemäße Gasphasenpolymerisationsanlage umfaßt wenigstens
- einen oder mehrere Wirbelschichtreaktor(en), vorzugsweise mit einem oder mehreren Einlässen und ggf. Düsen, zur Einführung von Kühlmittel zwecks direkter Kontaktierung mit Wirbelgas,
- wenigstens eine Kühlvorrichtung mit einem oder mehreren Einlässen, zur Einführung von Kühlmittel zwecks direkter Kontaktierung mit Wirbelgas,
- gegebenenfalls einen Tropfenabscheider, der vorzugsweise der Kühlung nachgeschaltet ist,
- gegebenenfalls eine Reinigungsvorrichtung, die vorzugsweise in die Kühlvorrichtung integriert ist oder mit ihr in Verbindung steht, zur Reinigung von Wirbelgas und/oder Wirbelgaskondensat und/oder Kühlmittel, und
- gegebenenfalls weitere dem Wirbelschichtreaktor oder den Wirbelschicht-reaktoren vor- und/oder nachgeschaltete Polymerisationsreaktoren.

Die in die Kühlvorrichtung integrierte Reinigungsvorrichtung kann gegebenenfalls so ausgestaltet sein, daß sie zugleich die Kühlvorrichtung darstellt.

Die erfindungsgemäße direkte Kühlvorrichtung ist der Polymerisationszone des Wirbelschichtreaktors nachgeschaltet und ist vorzugsweise außerhalb des Wirbelschichtreaktors angeordnet. In der erfindungsgemäßen direkten Kühlvorrichtung wird das Wirbelgas mit einem relativ zum Wirbelgas kühleren Kühlmittel, vorzugsweise einer Kühlflüssigkeit, in direkten Kontakt gebracht. Der durch den direkten Kontakt mit dem kälteren Flüssigkeitsstrom abgekühlte Gasstrom wird, gegebenenfalls nach Passieren einer Tröpfchenabscheidung, mittels einer Fördervorrichtung wieder dem Reaktor zugeführt. Vorgenannte Fördervorrichtung kann der erfindungsgemäßen direkten Kühlvorrichtung auch vorgeschaltet sein. In Abhängigkeit von den physikalischen Gegebenheiten (Druck, Temperatur, Phasengleichgewichtsverhalten, verfahrenstechnische Parameter des Kontaktes Gas-Flüssigkeit) lösen und kondensieren die Komponenten des Wirbelgases sich in der Kühlflüssigkeit, bzw. gehen Komponenten der Kühlflüssigkeit in das Wirbelgas über, da die Kühlflüssigkeit in dem erfindungsgemäßen Verfahren prinzipiell mit dem erwärmten Wirbelgas in direkten Kontakt kommt. Dabei stellt sich vorausgesetzt die Betriebsparameter bleiben unverändert ein stationärer Zustand zwischen dem die direkte Kühlvorrichtung verlassenden Gasstrom und der Kühlflüssigkeit ein. Zur Direktkühlung des erwärmten Wirbelgases mit einer kühleren Flüssigkeit ist es notwendig eine entsprechende Flüssig/Gas-Kontaktfläche zu schaffen. Aufgrund des gegenüber einer indirekten Kühlvorrichtung wesentlich besseren und effektiveren Wärmeübergangs, sind erfindungsgemäß weniger aufwendige Vorrichtungen als bei entsprechenden indirekten Kühlvorrichtungen notwendig. Die direkte Kühlung kann, insbesondere bei Gleichstromführung und entsprechender Gestaltung der direkten Kühlvorrichtung, z.B. unter Ausnutzung des Venturi-Effektes, vorteilhafterweise geringere Druckverluste hervorrufen als eine indirekte Kühlung. Als besonders vorteilhaft erweist sich die erfindungsgemäße direkte Kühlvorrichtung auch bei Verwendung in Polymerisationsanlagen, die neben wenigstens einem Wirbelschichtreaktor noch wenigstens einen weiteren vor- und/oder nachgeschalteten Polymerisationsreaktor, beispielsweise einen Schlaufenreaktor, aufweisen, da aufgrund des besonders effektiven Wärmeübergangs in der erfindungsgemäßen Kühlvorrichtung auch in solchen Anlagen eine ausreichende Wärmeabfuhr gewährleistet ist.

Für das erfindungsgemäße Gasphasenpolymerisationsverfahren ist in einer bevorzugten Ausführungsform die Verwendung von 2 bis 10, vorzugsweise von 2 bis 5 Wirbelschichtreaktoren und/oder Polymerisationsreaktor vorgesehen. Besonders bevorzugt ist die Verwendung von 3, 4, 5, 6, 7, 8 oder 9 Wirbelschichtreaktoren.

Eine direkte Kühlvorrichtung kann zum Beispiel einen Behälter umfassen, in dem eine oder mehrere Lagen von einer oder mehreren Düsen oder andere Zuteilvorrichtungen die Kühlflüssigkeit verteilen, wobei dies unter Verwendung von Einbauten, wie etwa Füllkörpern, Schikanen oder Kontaktböden, beispielsweise Siebböden, welche einen besseren Gas-/Flüssigkontakt bewirken, geschehen kann und wobei gegebenenfalls auch zwischen den Lagen der Düsen bzw. Zuteilvorrichtungen Fangböden für ein Sammeln der Kühlflüssigkeit sorgen und so eine vorteilhafte feine Abstimmung der Flüssigkeitsbelastung mit der Gasbelastung und somit letztendlich der Wärmeabfuhr ermöglichen, wobei die direkten Kühlvorrichtungen sowohl im Gleichstrom als auch im Gegenstrom sowie im Kreuzstrom bzw. einer Kombination dieser Prinzipien betrieben werden können.

Die erfindungsgemäß zur direkten Kühlung verwendete Kühlflüssigkeit umfaßt eine inerte und/oder ungesättigte Komponente. Die Kühlflüssigkeit kann auch Monomere und/oder Comonomere umfassen, wie z.B. Hexen, und/oder von den Monomeren und Comonomeren abgeleitete Folgeprodukte, beispielsweise Dimere, Trimere und/oder Oligomere enthalten. Die Kühlflüssigkeit kann auch ein ohnehin im Reaktionssystem vorhandenes bzw. dem Reaktor zusammen mit einer Reaktionskomponente zugeführtes Fluid sein. Zudem kann das als Kühlflüssigkeit fungierende Fluid auch ein für die Reaktion erforderlicher Zusatzstoff sein. In dem erfindungsgemäßen Gasphasenpolymerisationsverfahren kann die Kühlflüssigkeit somit ein Reaktant oder eine für die Reaktion erforderliche Komponente sein. In einer bevorzugten Ausführungsform, kann die Kühlflüssigkeit dem Kondensat des Wirbelgas entsprechen.

Als Kühlflüssigkeit bzw. Kühlflüssigkeitskomponenten für die erfindungsgemäße direkte Kühlvorrichtung eignen sich bevorzugt gesättigte verzweigte, unverzweigte oder cyclische Kohlenwasserstoffe, besonders bevorzugt Hexan. Erfindungsgemäße Kühlflüssigkeiten bzw. Kühlflüssigkeitskomponenten sind weiterhin auch leichter siedende Stoffe, wie zum Beispiel Butan oder auch Pentan. Erfindungsgemäß kann die Wärmetauschflüssigkeit auch hoch siedend sein, beispielsweise höhere Alkane oder Cykloalkane.

Die Zusammensetzung der die direkte Kühlvorrichtung verlassenden Komponenten richtet sich letztendlich nach den physikalischen Eigenschaften des Wirbelgases und der vorhandenen Kühlflüssigkeit, nach den physikalischen Gegebenheiten, wie Druck, Temperatur und Phasengleichgewichtsverhalten sowie nach den verfahrenstechnischen Gegebenheiten bei der Kühlung (d.h. Phasenverhalten, Stoff- und Wärmeübergangsverhältnisse etc.).

Bei kontinuierlich betriebenen Gasphasenpolymerisationsreaktionen wird der gasförmige Strom, der ein oder mehrere Monomere bzw. Comonomere enthält, unter Reaktionsbedingungen in Gegenwart eines oder mehrerer Katalysatoren bzw. Cokatalysatoren kontinuierlich durch einen Wirbelschichtreaktor geleitet. Der gasförmige Strom, im folgenden weiterhin als Wirbelgas bezeichnet, der nicht umgesetztes, gasförmiges Monomeres enthält, wird aus dem Wirbelschichtreaktor abgeführt, komprimiert, dann mittels der direkten Kühlvorrichtung gekühlt und wieder in den Reaktor rückgeführt bzw. erst mittels direkter Kühlung gekühlt, dann komprimiert und wieder in den Reaktor rückgeführt. Das Produkt wird aus dem Reaktor abgezogen und es wird die entsprechende Menge an Ersatzmonomeren bzw. Comonomeren dem Rückführungsstrom vor dem Eintritt in den Wirbelschichtreaktor oder dem Wirbelschichtreaktor direkt hinzugefügt. Die Temperatur des Wirbelgases innerhalb des Reaktors muß auf einer Temperatur gehalten werden, die nicht nur unterhalb der Zersetzungstemperaturen des polymeren Produktes und des Katalysators liegt, sondern auch unterhalb des Erweichungspunktes oder Schmelzpunktes der entstehenden polymeren Produktteilchen, da es ansonsten zur Bildung von Polymerklumpen kommt, die nicht kontinuierlich abgeführt werden können und zudem zum Verstopfen des Reaktors führen würden.

Erfindungsgemäß wird das rückzuführende Wirbelgas in einer direkten Kühlvorrichtung auf die erforderliche Temperatur abgekühlt. Dabei wird das Wirbelgas vor oder nach dem Eintritt in die direkte Kühlvorrichtung komprimiert, und dann in der Kühlvorrichtung in direkten Kontakt mit der Kühlflüssigkeit gebracht. Auf diese Weise ist ein wesentlich besserer Wärmeübergang bzw. eine effizientere Kühlung möglich, als bei den herkömmlichen im Stand der Technik beschriebenen, indirekt arbeitenden Kühlvorrichtungen (beispielsweise Rohrbündeln-wärmetauschern).

Der erfindungsgemäße Kühler kann sowohl im Kreuzstrom, im Gleichstrom als auch im Gegenstrom sowie mit einer Kombination vorgenannter Prinzipien betrieben werden. Zudem kann die erfindungsgemäße Kühlvorrichtung Einspritzvorrichtungen, Fangböden, Schikanen, Kontaktböden und/oder Packungen umfassen, die eine sehr feine Abstimmung der Flüssigkeitsbelastung mit der Gasbelastung ermöglichen. Erfindungsgemäß kann die direkte Kühlung des Wirbelgases auch in einem Flüssigkeitskompressor, z.B. in einem Flüssigkeitsstrahlkompressor erfolgen.

Erfindungsgemäß wird ein Verfahren zur Verfügung gestellt, bei dem das erwärmte Wirbelgas mittels direkter Kühlung abgekühlt wird und das gasförmige abgekühlte Wirbelfluid in den Wirbelschichtreaktor rückgeführt wird. Weiterhin ist erfindungsgemäß vorgesehen, daß das erwärmte Wirbelgas gegebenenfalls bis unterhalb den Taupunkt abgekühlt wird. Das in der direkten Kühlvorrichtung gegebenenfalls gebildete Zweiphasengemisch des Wirbelgases kann dem Wirbelschichtreaktor, gegebenenfalls auch unter weitgehender Phasentrennung, an einem oder mehreren Orten unterhalb und/oder oberhalb des Wirbelbetts und/oder auf Höhe des Wirbelbetts zugeführt werden, um so die Wärmeabfuhr bzw. die Kühlung des Reaktors gezielt zu steuern. In einer bevorzugten Ausführungsform wird das sich bildende Kondensat von der Kühlflüssigkeit, mit der die direkte Kühlung betrieben wird, aufgenommen bzw. vermischt sich mit dieser, wobei der sich so ergebende bilanzmäßige Überschuß, gegebenenfalls nach Abtrennung von festen Partikeln, ganz oder teilweise dem Wirbelschichtreaktor zugeführt wird.

Es ist erfindungsgemäß vorgesehen, daß das in der direkten Kühlvorrichtung gebildete Kondensat, welches sich gegebenenfalls aus Kühlflüssigkeit und kondensiertem Wirbelgas zusammensetzt, an einem oder verschiedenen Punkten des Reaktors eingeführt, beispielsweise eingespritzt wird, und so aufgrund der zusätzlichen Verdampfungskühlung zur Aufrechterhaltung der gewünschten Reaktionstemperatur beiträgt. Weiterhin ist erfindungsgemäß vorgesehen, daß zum Erhalt der Mengenbilanz gegebenenfalls Kühlflüssigkeit zugeführt wird.

Das erfindungsgemäße Gasphasenpolymerisationsverfahren stellt weiterhin eine Vorrichtung bereit, die die Ausbildung von Polymerisatbelägen in der Wirbel- bzw. Kreisgasleitung von Gasphasenpolymerisationsreaktoren nach Passage dieser Vorrichtung weitgehend verhindert und somit die Laufzeit solcher Anlagen deutlich verlängert. Die direkte Kühlvorrichtung fungiert gleichzeitig als Waschvorrichtung bzw. Staubwäscher. Das der Kühlvorrichtung zugeführte erwärmte Wirbelgas enthält typischerweise Anteile an aus dem Reaktor ausgetragenen Feststoffstäuben, die in der erfindungsgemäßen direkten Kühlvorrichtung mittels der (beispielsweise versprühten) Kühlflüssigkeit niedergeschlagen und ausgewaschen werden. Der niedergeschlagene Staub kann entfernt werden, indem man gegebenenfalls einen Teil des kondensierten Wirbelgaskühlflüssigkeit- Gemischs aus der direkten Kühlvorrichtung ausschleust. Auf diese Weise kann gegebenenfalls eine dem Reaktor nachgeschaltete Staubabscheidung entfallen. Die Disengagementzone des Reaktors, die meist eine birnenförmige Erweiterung des zylindrischen Teiles des Wirbelbettreaktors darstellt, entfälltimmer.

Weitere Vorteile des erfindungsgemäßen Gasphasenpolymerisationsverfahrens mit direkter Kühlvorrichtung ergeben sich aus den nachfolgend beschriebenen bevorzugten Ausführungsformen.

### Beispiel 1:

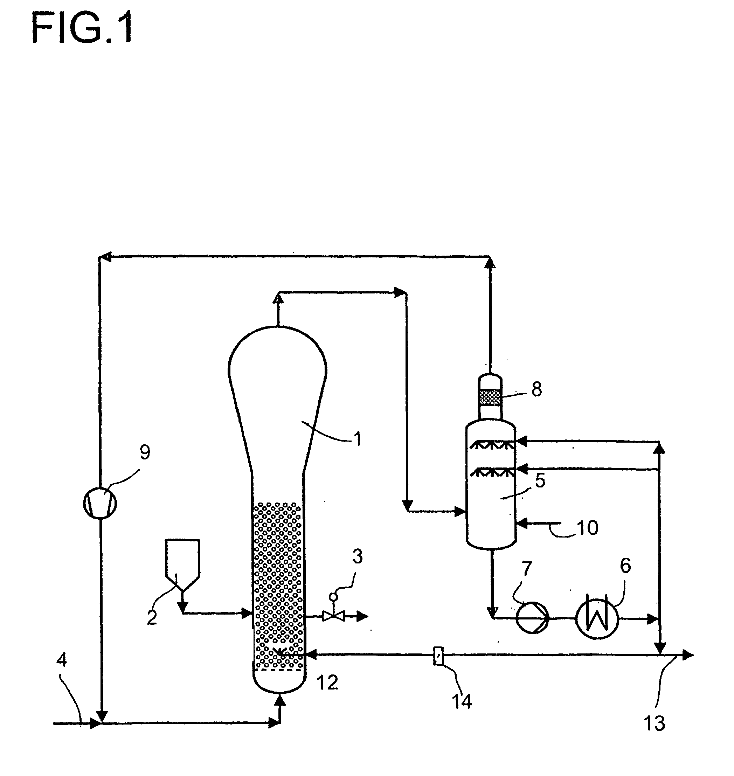

In Figur 1 ist eine nicht-erfindungsgemäße Ausführungsform des Gasphasenpolymerisationsverfahrens schematisch dargestellt.

In dem Wirbelschichtreaktor (1) erfolgt die Polymerisation von Polyolefinen in der Weise, daß ein Gasstrom von unten in den Reaktor eintritt und das sich bildende Polymerisat im fluidisierten Zustand hält; Das Polymerisat bildet sich mittels der Zugabe eines oder mehrerer Katalysatoren bzw. Co-Katalysatoren, welche durch die Zugabevorrichtung (2) zugeführt werden. Über solche Zugabevorrichtungen (2) können gegebenenfalls weitere Komponenten, wie beispielsweise Antistatika, Comonomere, Wasserstoff etc., zugeführt werden. Die Zugabe vorgenannter Komponenten kann auch gegebenenfalls in den rückzuführenden Gasstrom vor Eintritt in den Reaktor erfolgen. Das pulverförmige Polymerisat wird i.a. durch kontinuierliches oder diskontinuierliches Öffnen eines oder mehrerer Verschlußorgane (3) in ein Gefäß mit niedrigerem Druck ausgetragen, von wo es dann weiteren Verarbeitungsstufen zugeht. Der das Fließbett aufrechterhaltende Gasstrom, der als wesentliche Komponente das Monomer enthält, welches diesem Gasstrom beispielsweise bei (4) zugeführt wird, erwärmt sich als Folge der exothermen Reaktion des Monomeren zum Polymerisat. Um die Reaktion aufrecht und stabil halten zu können, muß im Reaktorsystem gerade soviel Wärme abgeführt werden, wie durch die Reaktion entsteht, wobei noch die Enthalpien der zu- und abgeführten Stoffströme zu berücksichtigen sind. Typische Verhältnisse im Reaktor sind:

Die Temperatur des austretenden Wirbelgasstroms beträgt 80°C bis 115°C bei einem Druck von 10 bis 25 bar, vorzugsweise 18 bis 22 bar. Dieser Gasstrom (sogenanntes Kreis- bzw. Wirbelgas) wird nun dadurch abgekühlt, daß er erfindungsgemäß in einer direkten Kühlvorrichtung bzw. in einem Kontaktapparat (5) mit einem relativ zum Gasstrom kühleren Flüssigkeitsstrom (sogenannte Kühlflüssigkeit) in Kontakt gebracht wird, wobei der aus diesem Wärmetauscher austretende Flüssigkeitsstrom seinerseits über einen indirekten Wärmetauscher (6) rückgekühlt und wieder dem Kontaktapparat (5) zugeführt wird. Eine Pumpenvorrichtung (7) sorgt für den Umlauf des Flüssigkeitsstroms. Der durch den direkten Kontakt mit dem kälteren Flüssigkeitsstrom abgekühlte Gasstrom wird, gegebenenfalls nach Passieren einer Tröpfchenabscheidung (8), mittels einer Fördervorrichtung (9) wieder dem Reaktor zugeführt. Dabei wird das durch die Polymerisatbildung bilanzmäßig erforderliche Monomere zugesetzt, wie oben erwähnt. Abhängig von den physikalischen Gegebenheiten (Druck, Temperatur, Phasengleichgewichtsverhalten, verfahrenstechnische Parameter des Kontaktes Gas-Flüssigkeit) lösen und kondensieren die Komponenten des Wirbelgases sich in der Kühlflüssigkeit, bzw. gehen Komponenten der Kühlflüssigkeit ins Wirbelgas über. Dabei stellt sich vorausgesetzt die Betriebsparameter bleiben alle unverändert- ein stationärer Zustand zwischen dem den Direktkühler verlassenden Gasstrom und der Kühlflüssigkeit ein.

Der sich durch die Auskondensation der vorzugsweise schwerer siedenden Komponenten des Wirbelgases sowie gegebenenfalls durch die Zufuhr von frischer Kühl- bzw. Waschflüssigkeit, (z.B. bei (10)), ergebende Überschuß an Flüssigkeit wird dem Reaktor in kondensierter Form zugeführt. In Figur 1 wird dies als Eindüsung dieser Flüssigkeit bei (12) in den Reaktor schematisch dargestellt. Gegebenenfalls wird auch ein Teilstrom aus dem Direktkühlsystem, beispielsweise bei (13), ausgeschleust, um eventuell niedergeschlagenen Staub zu entfernen oder bestimmte reaktionstechnische Verhältnisse einzustellen bzw. zu regulieren.

Zusätzlich kann der Filter (14) dazu dienen, eventuell niedergeschlagenen Staub zurückzuhalten sowie die Einspritzvorrichtung bzw. die Düsen zu schützen. Gegebenenfalls kann der dem Reaktor in kondensierter Form zuzuführende Strom durch indirekten Wärmeaustausch zusätzlich weiter gekühlt werden (nicht dargestellt).

Zur Direktkühlung des erwärmten Gases mit einer kühlen Flüssigkeit ist es notwendig, eine entsprechende Flüssig/Gas-Kontaktfläche zu schaffen. Die direkte Kühlvorrichtung bzw. der Kontaktapparat (5) kann daher zum Beispiel aus einem schlanken Behälter bestehen, in dem eine oder mehrere Lagen von einer oder mehreren Düsen die Kühlflüssigkeit verteilen, wobei auch zwischen den Lagen der Düsen Fangböden für ein Sammeln der Flüssigkeit sorgen und so eine feine Abstimmung der Flüssigkeitsbelastung mit der Gasbelastung ermöglichen.

Auch andere Ausführungen der Direktkühlung sind möglich, beispielsweise flüssigkeitsbeaufsschlagte Gleich- oder Gegenstromkolonnen mit Böden oder Packungen. Die direkte Kühlvorrichtung kann ferner eine Tröpfchenabscheidung (8) besitzen, bestehend zum Beispiel aus den in der Technik bekannten Gewebe- und Schrägplattenabscheidern.

### Beispiel 2:

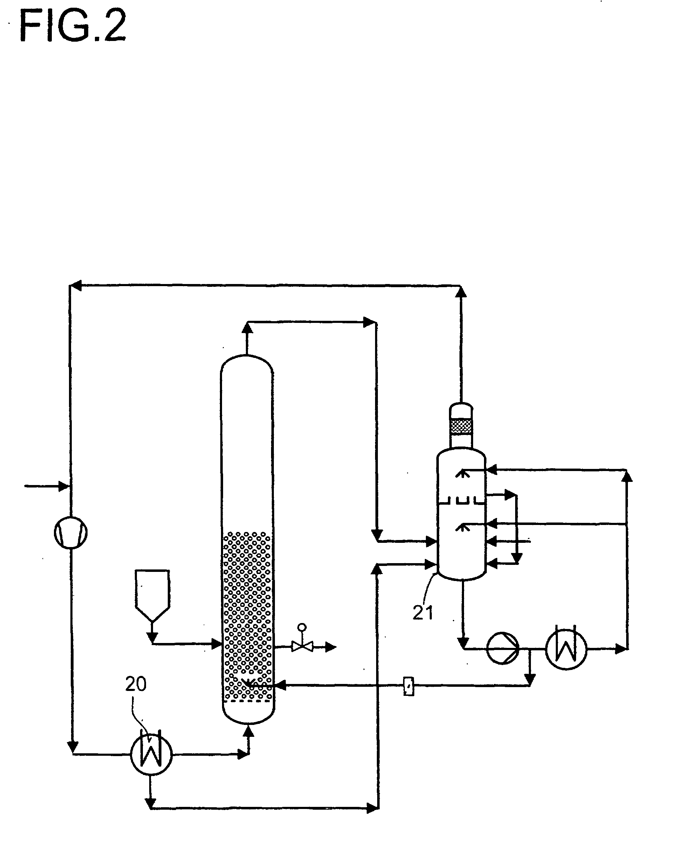

Figur 2 zeigt ein erfindungsgemäß bevorzugtes Ausführungsbeispiel.

Hier wird nur ein Teil der insgesamt dem System zu entziehenden Wärme mittels direkter Kühlung abgeführt. Es ist vorgesehen, daß beispielsweise nach der Fördervorrichtung (9) (z.B. ein Turbokompressor) ein konventioneller, d.h. indirekter Wärmetausch mit Hilfe eines Röhrenwärmetauschers oder Plattenwärmetauschers (20) o.ä., welcher mit Kühlmittel (beispielsweise Kühlwasser) beaufschlagt ist, stattfindet, wobei dieser indirekte Wärmeaustausch auch in mehreren serien- oder parallelgeschalteten, mit gleichen oder unterschiedlichen Kühlmitteln beaufschlagten indirekten Wärmetauschern geschehen kann. Das in dem Wärmetauscher (20) bzw. in einem darin integrierten oder nachgeschalteten Abscheider gegebenenfalls anfallende Kondensat kann in der direkten Kühlvorrichtung allein, beispielsweise bei (21), oder zusammen mit anderen Flüssigkeiten als Kühlflüssigkeit für den direkten Wärmeaustausch eingesetzt werden.

### Beispiel 3:

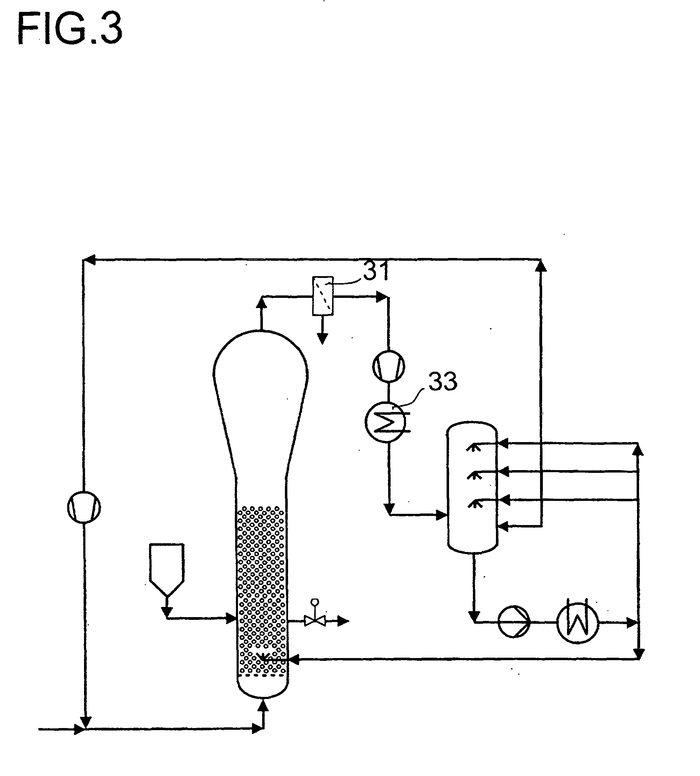

In Figur 3 wird ein nicht-erfindungsgemäßes Ausführungsbeispiel schematisch dargestellt, welches im wesentlichen dem in Figur 1 erläuterten Beispiel entspricht. Das den Fließbettreaktor verlassende Gas wird -gegebenenfalls nach einer Feinststaubabscheidung (31), beispielsweise mit Hilfe eines Zyklons oder Filters -komprimiert und wird über einen konventionellen Wärmetauscher (33), das heißt indirekten Wärmetauscher, der direkten Kühlvorrichtung wie in Beispiel 1 beschrieben zugeführt.

### Beispiel 4:

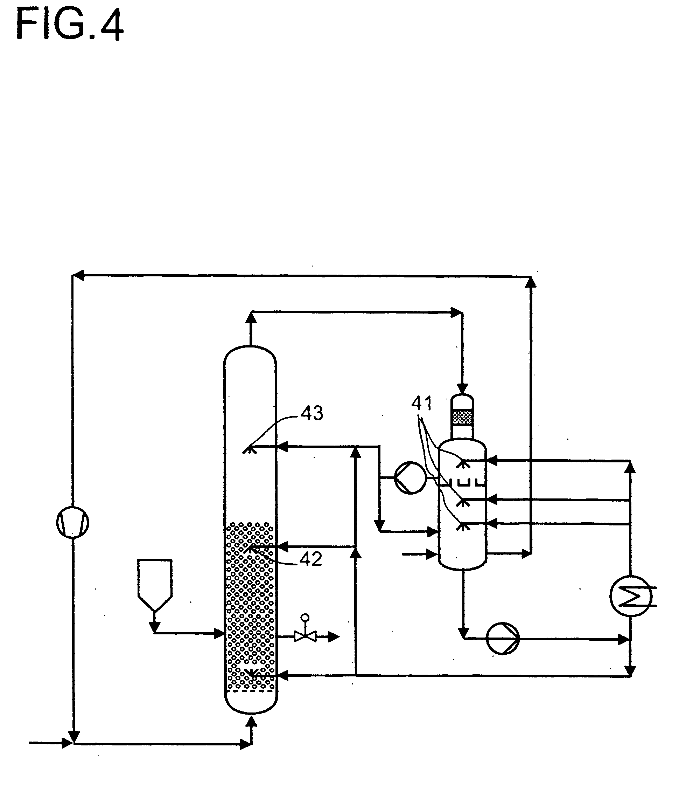

In Figur 4 wird ein weiteres bevorzugtes Ausführungsbeispiel des erfindungsgemäßen Verfahrens schematisch dargestellt, welches auf im folgenden beschriebenen Modifikationen der in den vorangegangenen Beispielen erläuterten Ausführungsbeispiele basiert. Das den Wirbelschichtreaktor (1) verlassende Gas wird in den Direktkühler geführt, wobei hier der Kontaktapparat (5) im Gleichstrom betrieben wird, was bedeutet, daß sowohl das Wirbelgas als auch die Kühlflüssigkeit von oben nach unten strömen und dabei innig miteinander in Kontakt treten. Auf diese Art und Weise wird ein besonders effizienter Wärme- und Stoffaustausch bewirkt. Dabei kann die Kühlflüssigkeit im Kontaktapparat in eine oder mehrere Ebenen (41) verteilt werden und es kann ebenso mittels einer oder mehrerer Fangböden die Kühlflüssigkeit der einzelnen Flüssigkeitszuführungen auf den jeweiligen Ebenen aufgefangen und gesondert abgeleitet werden, z.B. insbesondere auf der Ebene des Gaseintrittes wo neben der Kühlung des Gases auch eine weitgehende Auswaschung des eventuell aus dem Reaktor mitgerissenen Staubes erfolgen kann.

Ebenso kann die überschüssige Kühlflüssigkeit im Reaktor beliebig, d.h. in verschiedenen Ebenen (42) unterhalb und/oder oberhalb des Wirbelbetts und/oder in Höhe des Wirbelbetts injiziert werden. Ein Einspritzen über Düsen, welche oberhalb des Wirbelbettes angeordnet sind, reduziert den mit dem Gas mitgerissenen Feinstaubanteil.

### Beispiel 5:

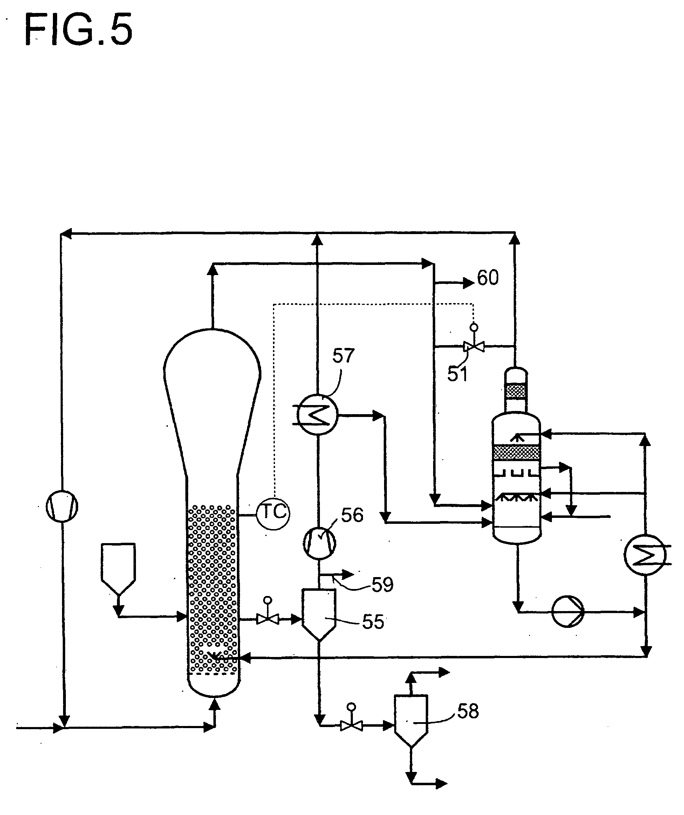

Das in Figur 5 dargestellte Nicht-erfindungsgemäße Ausführungsbeispiel beinhaltet ebenfalls eine direkte Kühlvorrichtung analog zu dem in Beispiel 1 beschriebenen Verfahren. Die direkte Kühlvorrichtung bzw. der Kontaktapparat der Direktkühlung (5) ist hier als Gegenstromapparat mit einer Ebene Düsen und einer berieselten Packung mit Fangboden dargestellt. Ferner ist eine vereinfacht gezeichnete Temperatur- und Anfahrregelung, gestaltet als Bypassregelung (51) um den Direktwärmetausch, dargestellt. Das Reaktionssystem ist insoweit ergänzend dargestellt, als daß der Austrag des Polymerisates über eines oder mehrere Verschlußorgane (3) in eine erste Abscheidestufe (55) gelangt. Der dort abgetrennte Gasstrom, das sogenannte Carriergas, wird von dem dort herrschenden Druck, der deutlich unter dem des Reaktors liegt, beispielsweise bei 5 bis 11 bar, mittels der Förderung (56) wieder auf Reaktordruck gebracht. Der Gasstrom kann dann über einen indirekten Wärmetauscher (57) vorgekühlt werden und das gekühlte Gas dem dem Innenreaktor zurückzuführenden Strom zugeführt werden bzw. das eventuell anfallende Kondensat in die direkte Kühlvorrichtung eingeleitet werden.

Das Polymerisat wird aus der Abscheidung (55) wiederum in ein Gebiet niedrigen Druckes, nämlich der Abscheidung (58), bei 1 bis 5 bar kontinuierlich oder diskontinuierlich zusammen mit etwas Gas ausgetragen. Der in dieser Abscheidung frei werdende Gasstrom wird abgezogen, gegebenenfalls zusammen mit einem bei (58) zugeführten Spülgasstrom o.ä.. Das Polymerisat verläßt die Abscheidung zur weiteren Verarbeitung. Gegebenenfalls wird aus der Abscheidung (55) ebenfalls ein Abgasstrom bei (59) abgeführt, ebenso wie z.B. bei (60) gegebenenfalls ein weiterer Abgasstrom abgeführt werden kann.

## Patentansprüche

1. Kontinuierliches Gasphasenpolymerisationsverfahren zur Herstellung von Polyolefinen, vorzugsweise Polyethylen, bei welchem man die fluide monomere Komponente, vorzugsweise Ethylen, sowie gegebenenfalls eines oder mehrere Comonomere in der Polymerisationszone wenigstens eines Wirbelschichtreaktors in Anwesenheit eines oder mehrerer Katalysatoren unter Reaktionsbedingungen polymerisiert, wobei das Wirbelgas zur Abführung der Polymerisations- bzw. Reaktionswärme im Kreislauf geführt wird und das Polymerisationsprodukt aus dem Kreislauf abgezogen sowie die entsprechende Menge an Monomeren sowie gegebenenfalls Comonomeren und gegebenenfalls weitere Hilfsstoffe ergänzend zugeführt wird,
**dadurch gekennzeichnet, daß** aus dem Wirbelschichtreaktor abgeführtes Wirbelgas mittels einer direkten Kühlvorrichtung, bei der Kühlmittel in direkten Kontakt mit dem Wirbelgas gebracht wird, abgekühlt wird, wobei erwärmtes Kühlmittel wenigstens einer weiteren Kühlstufe zwecks Abkühlung zugeführt wird und nach Abkühlung vollständig oder teilweise in die direkte Kühlvorrichtung rückgeführt wird und/oder wobei erwärmtes oder abgekühltes Kühlmittel vollständig oder teilweise in den Wirbelschichtreaktor rückgeführt wird und wobei der Wirbelschichtreaktor keine Disengagementzone aufweist.

2. Gasphasenpolymerisationsverfahren nach Anspruch 1,
**dadurch gekennzeichnet, daß** das Wirbelgas teilweise bis unter den Taupunkt abgekühlt wird.

3. Gasphasenpolymerisationsverfahren nach Anspruch 1 und 2,
**dadurch gekennzeichnet, daß** das Wirbelgas, vorzugsweise nach einem Reinigungsschritt, gasförmig und/oder in kondensierter Form und/oder als zweiphasiges Gemisch, gegebenenfalls zusammen mit Kühlmittel, in den Wirbelgaskreislauf, vorzugsweise in den Wirbelschichtreaktor, rückgeführt wird.

4. Gasphasenpolymerisationsverfahren nach einem der vorangehenden Ansprüche,
**dadurch gekennzeichnet, daß** das abgekühlte Wirbelgas zusammen mit einem gegebenenfalls vorhandenen Anteil an Kühlflüssigkeit vor der Rückführung in den Wirbelschichtreaktor einem Tropfenabscheider zugeführt wird.

5. Gasphasenpolymerisationsverfahren nach einem der vorangehenden Ansprüche,
**dadurch gekennzeichnet, daß** das Kühlmittel eine inerte Kühlflüssigkeit, eine ungesättigte Kühlflüssigkeit und/oder ein Kühlflüssigkeitsgemisch von einer oder mehreren der vorgenannten Kühlflüssigkeiten umfaßt, umfassend vorzugsweise einen gesättigten verzweigten, unverweigten oder cyclischen Kohlenwasserstoff mit C₄-C₁₂, besonders bevorzugt Pentan, insbesondere bevorzugt Hexan und/oder das Kondensat des Wirbelgases und/oder ein Gemisch aus Monomeren, Comonomeren, Oligomeren und/oder Reaktionsprodukte davon umfaßt.

6. Gasphasenpolymerisationsverfahren nach einem der vorangehenden Ansprüche,
**dadurch gekennzeichnet, daß** das abgekühlte Wirbelgas zusammen mit einem gegebenenfalls vorhandenen Anteil an Kühlflüssigkeit gasförmig und/oder in kondensierter Form und/oder als zweiphasiges Gemisch an einem oder mehreren Orten unterhalb und/oder oberhalb des Wirbelbetts und/oder auf Höhe des Wirbelbetts in den Wirbelschichtreaktor eingeführt wird.

7. Gasphasenpolymerisationsverfahren nach einem der vorangehenden Ansprüche,
**dadurch gekennzeichnet, daß** das Wirbelgas vor oder nach dem Eintritt in die direkte Kühlvorrichtung komprimiert wird.

8. Gasphasenpolymerisationsverfahren nach einem der vorangehenden Ansprüche,
**dadurch gekennzeichnet, daß** die direkte Kühlung des Wirbelgases vollständig oder teilweise in einem Flüssigkeitskompressor erfolgt.

9. Gasphasenpolymerisationsverfahren nach einem der vorangehenden Ansprüche,
**dadurch gekennzeichnet, daß** die direkte Kühlvorrichtung im Gleich-, Gegen- und/oder Kreuzstrom betrieben wird.

10. Gasphasenpolymerisationsverfahren nach Anspruch 1,
**dadurch gekennzeichnet, daß** die direkte Kühlvorrichtung Kühlmittelaufgabe-vorrichtungen, Schikanen, Gas-/Flüssigkeitskontaktböden, Fangböden und/oder Packungen aufweist.

11. Gasphasenpolymerisationsverfahren nach einem der vorangehenden Ansprüche,
**dadurch gekennzeichnet, daß** die direkte Kühlvorrichtung eine Reinigungs-vorrichtung zur Reinigung des Wirbelgases umfaßt.

12. Gasphasenpolymerisationsverfahren nach einem der vorangehenden Ansprüche,
**dadurch gekennzeichnet, daß** Monomer, vorzugsweise ein Olefinmonomer mit 2 bis 4 Kohlenstoffatomen, sowie gegebenenfalls Comonomer, vorzugsweise ein α-Olefinmonomer mit 2 bis 8 Kohlenstoffatomen, dem zurückzuführenden, abgekühlten Wirbelgasstrom vor Eintritt in den Wirbelschichtreaktor oder dem Mirbelschichtreaktor direkt zugegeben wird.

13. Gasphasenpolymerisationsverfahren nach einem der vorangehenden Ansprüche,
**dadurch gekennzeichnet, daß** von 2 bis 10, besonders bevorzugt von 2 bis 5 Wirbelschichtreaktoren und/oder Polymerisationsreaktoren verwendet werden.

14. Gasphasenpolymerisationsanlage geeignet für die Gasphasenpolymerisation zur Herstellung von Polyolefinen nach einem der vorangehenden Verfahren, wenigstens umfassend:
- einen oder mehrere Wirbelschichtreaktor(en), vorzugsweise mit einem oder mehreren Einlässen und ggf. Düsen, zur Einführung von Kühlmittel zwecks direkter Kontaktierung mit Wirbelgas,
wobei der Wirbelschichtreaktor keine Disengagementzone aufweist,
- wenigstens eine Kühlvorrichtung mit einem oder mehreren Einlässen zur Einführung von Kühlmittel zwecks direkter Kontaktierung mit Wirbelgas,
- gegebenenfalls einen Tropfenabscheider, der vorzugsweise der Kühlung nachgeschaltet ist,
- gegebenenfalls eine Reinigungsvorrichtung, die vorzugsweise in die Kühlvorrichtung integriert ist oder mit ihr in Verbindung steht, zur Reinigung von Wirbelgas und/oder Wirbelgaskondensat und/oder Kühlmittel, und
- gegebenenfalls weitere dem Wirbelschichtreaktor oder den Wirbelschicht-reaktoren vor- und/oder nachgeschalteten Polymerisationsreaktoren.

15. Gasphasenpolymerisationsanlage nach Anspruch 14,
**dadurch gekennzeichnet, daß** die Kühlvorrichtung wenigstens eine Kühlmittel-aufgabevorrichtung, Schikane, Gas-/Flüssigkontaktboden, Fangboden und/oder Packung aufweist.

## Claims

1. A continuous gas-phase polymerization process for preparing polyolefins, preferably polyethylene, in which the fluid monomeric component, preferably ethylene, and, optionally, one or more comonomers is/are polymerized in the polymerization zone of at least one fluidized-bed reactor in the presence of one or more catalysts under reaction conditions where the fluidizing gas is circulated to remove the heat of polymerization or reaction and the polymerization product is taken from the circuit and the corresponding amount of monomer and, optionally, comonomers and optionally further auxiliaries are fed in,
wherein the fluidizing gas discharged from the fluidized-bed reactor is cooled by means of a direct cooling apparatus in which the coolant is brought into direct contact with the fluidizing gas and heated coolant is passed to at least one further cooling stage in order to cool it and is, after cooling, wholly or partly returned to the direct cooling apparatus and/or heated or cooled coolant is wholly or partly returned to the fluidized-bed reactor and the fluidized-bed reactor does not have a disengagement zone.

2. A gas-phase polymerization process as claimed in claim 1,
wherein part of the fluidizing gas is cooled to below the dew point.

3. A gas-phase polymerization process as claimed in claim 1 or 2,
wherein the fluidizing gas is, preferably after a purification step, returned in gaseous form and/or in condensed form and/or as a two-phase mixture, optionally together with a coolant, to the fluidizing gas circuit, preferably to the fluidized-bed reactor.

4. A gas-phase polymerization process as claimed in any of the preceding claims,
wherein the cooled fluidizing gas together with any cooling liquid which may be present is introduced into a droplet precipitator prior to being returned to the fluidized-bed reactor.

5. A gas-phase polymerization process as claimed in any of the preceding claims,
wherein the coolant comprises an inert cooling liquid, an unsaturated cooling liquid and/or a cooling liquid mixture of two or more of the abovementioned cooling liquids, preferably comprises a saturated branched, unbranched or cyclic hydrocarbon having from 4 to 12 carbon atoms, particularly preferably pentane, and very particularly preferably comprises hexane and/or the condensate of the fluidizing gas and/or a mixture of monomers, comonomers, oligomers and/or reaction products thereof.

6. A gas-phase polymerization process as claimed in any of the preceding claims,
wherein the cooled fluidizing gas together with any cooling liquid present is introduced in gaseous form and/or in condensed form and/or as a two-phase mixture into the fluidized-bed reactor at one or more points above and/or below the fluidized bed and/or at the level of the fluidized bed.

7. A gas-phase polymerization process as claimed in any of the preceding claims,
wherein the fluidizing gas is compressed before or after entry into the direct cooling apparatus.

8. A gas-phase polymerization process as claimed in any of the preceding claims,
wherein the direct cooling of the fluidizing gas is carried out wholly or partly in a liquid compressor.

9. A gas-phase polymerization process as claimed in any of the preceding claims,
wherein the direct cooling apparatus is operated in cocurrent, in countercurrent and/or in the crossflow mode.

10. A gas-phase polymerization process as claimed in claim 1,
wherein the direct cooling apparatus has coolant distributing devices, baffles, gas/liquid contact trays, collector trays and/or packing.

11. A gas-phase polymerization process as claimed in any of the preceding claims,
wherein the direct cooling apparatus comprises a purifying apparatus for purifying the fluidizing gas.

12. A gas-phase polymerization process as claimed in any of the preceding claims,
wherein monomer, preferably an olefinic monomer having from 2 to 4 carbon atoms, and, optionally, comonomer, preferably an α-olefin monomer having from 2 to 8 carbon atoms, is/are introduced directly into the cooled fluidizing gas stream to be returned before it enters the fluidized-bed reactor or is/are introduced directly into the fluidized bed reactor.

13. A gas-phase polymerization process as claimed in any of the preceding claims,
wherein from 2 to 10, particularly preferably from 2 to 5, fluidized-bed reactors and/or polymerization reactors are used.

14. A gas-phase polymerization apparatus suitable for preparing polyolefins by a process as claimed in any of the preceding claims, comprising at least:
- one or more fluidized-bed reactor(s), preferably having one or more inlets and, if appropriate, nozzles for introduction of coolant for the purpose of contacting it directly with fluidizing gas, where the fluidized-bed reactor does not have a disengagement zone,
- at least one cooling apparatus having one or more inlets for introduction of coolant for the purpose of contacting it directly with fluidizing gas,
- if desired, a droplet precipitator which is preferably located downstream of the cooling apparatus,
- if desired, a purification apparatus which is preferably integrated into the cooling apparatus or is connected thereto, for the purification of fluidizing gas and/or fluidizing gas condensate and/or coolant, and
- if desired, further polymerization reactors upstream and/or downstream of the fluidized-bed reactor or the fluidized-bed reactors.

15. A gas-phase polymerization apparatus as claimed in claim 14,
wherein the cooling apparatus has at least one coolant distributing device, baffles, gas/liquid contact trays, collector trays and/or packing.

## Revendications

1. Procédé de polymérisation en phase gazeuse en continu pour la préparation de polyoléfines, de préférence de polyéthylène, dans lequel on polymérise le composant monomère fluide, de préférence l'éthylène, ainsi qu'éventuellement un ou plusieurs comonomères, dans la zone de polymérisation d'au moins un réacteur à lit fluidisé, en présence d'un ou de plusieurs catalyseurs, dans des conditions de réaction dans lesquelles le gaz tourbillonnant circule en boucle afin d'évacuer la chaleur de la polymérisation ou de la réaction et le produit de polymérisation est évacué du circuit et la quantité appropriée de monomères ainsi qu'éventuellement de comonomères et éventuellement d'autres adjuvants est ajoutée,
**caractérisé en ce que** le gaz tourbillonnant évacué du réacteur à lit fluidisé est refroidi par l'intermédiaire d'un dispositif de refroidissement direct, dans lequel le réfrigérant est mis en contact direct avec le gaz tourbillonnant, le réfrigérant réchauffé étant conduit dans au moins une autre étape de refroidissement en vue du refroidissement et étant recyclé entièrement ou partiellement après le refroidissement dans le dispositif de refroidissement direct et/ou le réfrigérant réchauffé ou refroidi étant entièrement ou partiellement recyclé dans le réacteur à lit fluidisé, et dans lequel le réacteur à lit fluidisé ne présente pas de zone de désengagement.

2. Procédé de polymérisation en phase gazeuse selon la revendication 1,
**caractérisé en ce que** le gaz tourbillonnant est partiellement refroidi jusqu'en dessous du point de rosée.

3. Procédé de polymérisation en phase gazeuse selon la revendication 1 ou 2,
**caractérisé en ce que** le gaz tourbillonnant est recyclé, de préférence à la suite d'une étape de purification, dans le circuit de gaz tourbillonnant, de préférence dans le réacteur à lit fluidisé, sous forme gazeuse et/ou condensée et/ou de mélange à deux phases, éventuellement conjointement avec le réfrigérant.

4. Procédé de polymérisation en phase gazeuse selon l'une quelconque des revendications précédentes,
**caractérisé en ce que** le gaz tourbillonnant refroidi est conduit, avant le recyclage dans le réacteur à lit fluidisé, dans un dévésiculeur conjointement avec une fraction éventuellement présente de liquide réfrigérant.

5. Procédé de polymérisation en phase gazeuse selon l'une quelconque des revendications précédentes,
**caractérisé en ce que** le réfrigérant comprend un liquide réfrigérant inerte, un liquide réfrigérant insaturé et/ou un mélange de liquides réfrigérants composé d'un ou de plusieurs des liquides réfrigérants susmentionnés, comprenant de préférence un hydrocarbure en C₄ à C₁₂ saturé, ramifié, non ramifié ou cyclique de manière plus particulièrement préférée du pentane, de manière tout particulièrement préférée de l'hexane et/ou le produit de condensation du gaz tourbillonnant et/ou un mélange composé de monomères, de comonomères, d'oligomères et/ou de produits réactionnels de ceux-ci.

6. Procédé de polymérisation en phase gazeuse selon l'une quelconque des revendications précédentes,
**caractérisé en ce que** le gaz tourbillonnant refroidi est introduit, conjointement avec une fraction éventuellement présente de liquide réfrigérant, sous forme gazeuse et/ou condensée et/ou de mélange à deux phases, dans le réacteur à lit fluidisé à un ou plusieurs endroits en dessous ou au-dessus du lit fluidisé et/ou à hauteur du lit fluidisé.

7. Procédé de polymérisation en phase gazeuse selon l'une quelconque des revendications précédentes,
**caractérisé en ce que** le gaz tourbillonnant est comprimé avant ou après son entrée dans le dispositif de refroidissement direct.

8. Procédé de polymérisation en phase gazeuse selon l'une quelconque des revendications précédentes,
**caractérisé en ce que** l'on réalise le refroidissement direct du gaz tourbillonnant entièrement ou partiellement dans un compresseur à liquide.

9. Procédé de polymérisation en phase gazeuse selon l'une quelconque des revendications précédentes,
**caractérisé en ce que** le dispositif de refroidissement direct fonctionne en co-courant, à contre-courant et/ou en courant croisé.

10. Procédé de polymérisation en phase gazeuse selon l'une quelconque des revendications précédentes,
**caractérisé en ce que** le dispositif de refroidissement direct présente des dispositifs de distribution de réfrigérant, des chicanes, des plateaux de contact gaz/liquide, des plateaux collecteurs et/ou des garnitures.

11. Procédé de polymérisation en phase gazeuse selon l'une quelconque des revendications précédentes,
**caractérisé en ce que** le dispositif de refroidissement direct comprend un dispositif de purification pour purifier le gaz tourbillonnant.

12. Procédé de polymérisation en phase gazeuse selon l'une quelconque des revendications précédentes,
**caractérisé en ce que** le monomère, de préférence un monomère oléfine possédant 2 à 4 atomes de carbone, ainsi qu'éventuellement le comonomère, de préférence un comonomère α-oléfine possédant 2 à 8 atomes de carbone, sont ajoutés au courant de recyclage du gaz tourbillonnant refroidi avant son entrée dans le réacteur à lit fluidisé ou directement dans le réacteur à lit fluidisé.

13. Procédé de polymérisation en phase gazeuse selon l'une quelconque des revendications précédentes,
**caractérisé en ce que** l'on utilise 2 à 10, de manière plus particulièrement préférée 2 à 5 réacteurs à lit fluidisé et/ou réacteurs de polymérisation.

14. Dispositif de polymérisation en phase gazeuse approprié pour la polymérisation en phase gazeuse en vue de la préparation de polyoléfines selon l'un quelconque des procédés précédents, comprenant au moins :
- un ou plusieurs réacteurs à lit fluidisé, présentant de préférence une ou plusieurs entrées et éventuellement des buses, pour introduire un réfrigérant en vue de la mise en contact directe avec un gaz tourbillonnant, le réacteur à lit fluidisé ne présentant pas de zone de désengagement,
- au moins un dispositif de refroidissement présentant une ou plusieurs entrées pour introduire un réfrigérant en vue de la mise en contact directe avec un gaz tourbillonnant,
- éventuellement un dévésiculeur, qui est monté de préférence en aval du dispositif de refroidissement,
- éventuellement un dispositif de purification, qui est de préférence intégré dans le dispositif de refroidissement ou qui est raccordé à celui-ci, pour purifier un gaz tourbillonnant et/ou un produit de condensation d'un gaz tourbillonnant et/ou un réfrigérant, et
- éventuellement d'autres réacteurs de polymérisation montés en amont et/ou en aval du ou des réacteurs à lit fluidisé.

15. Dispositif de polymérisation en phase gazeuse selon la revendication 14,
**caractérisé en ce que** le dispositif de refroidissement présente au moins un dispositif de distribution de réfrigérant, une chicane, un plateau de contact gaz/liquide, un plateau collecteur et/ou une garniture.
